# EUROPÄISCHE PATENTANMELDUNG

(11) **EP 3 184 276 A1**
(43) Veröffentlichungstag der Anmeldung: **28.06.2017**
(21) Anmeldenummer: 16205119.7
(22) Anmeldetag: 19.12.2016
(51) Int. Cl.: B29C 43/36, B29C 43/58, B30B 15/28, B30B 1/00, B30B 15/06

(54) **FORMWERKZEUG**

(30) Priorität: 22.12.2015 DE 102015122632
(71) Anmelder: BBG GmbH & Co. KG, 87719 Mindelheim (DE)
(72) Erfinder: Brandner, Hans, 87719 Mindelheim (DE); Gutleber, Stefan, 87719 Mindelheim (DE)
(74) Vertreter: Wiese, Gerhard

(57) **Zusammenfassung**

Die Erfindung betrifft ein Werkzeug mit einem Werkzeug-Oberteil (21) und einem Werkzeug-Unterteil (31), die zum Öffnen oder Schließen gegeneinander bewegbar angeordnet sind. Zur Vermeidung einer Beschädigung des Werkzeugs ist vorgesehen, dass das Werkzeug-Oberteil (21) oder das Werkzeug-Unterteil (31) bewegbar an einem Trägerteil (10) gelagert ist, wobei zwischen Werkzeug-Oberteil (21) oder Werkzeug-Unterteil (31) und dem dieses lagernden Trägerteil (10) eine Kompensationsvorrichtung (40) angeordnet ist, wobei eine Relativbewegung zwischen dem Trägerteil (10) und dem dieses lagernden Werkzeug-Oberteil (21) oder Werkzeug-Unterteil (31) mittels eines Sensors (18) feststellbar ist und wobei aufgrund eines Signals des Sensors (18) eine Betätigungsvorrichtung zum Öffnen des Werkzeug-Oberteils (21) und des Werkzeug-Unterteils (31) und /oder die Kompensationsvorrichtung (40) zur Verhinderung eines Einklemmens eines Gegenstandes (50) betätigbar ist. Erfindungsgemäß wird die Kompensationsvorrichtung (40) von wenigstens einem mit einem Fluiddruck beaufschlagbaren oder entlastbaren Element gebildet. Die Erfindung betrifft auch ein Verfahren zum Schließen eines derartigen Werkzeugs.

## Beschreibung

Die Erfindung betrifft ein Formwerkzeug mit einem Formwerkzeug-Oberteil und einem Formwerkzeug-Unterteil, die zum Öffnen oder Schließen gegeneinander bewegbar angeordnet sind, gemäß dem Oberbegriff des Patentanspruchs 1.

Ein derartiges Formwerkzeug ist aus der DE 41 17 542 A1 bekannt. Bei diesem ist im Kraftübertragungsweg ein Blattfederpaket und eine diesem benachbarte Vorrichtung zum Messen der Presskraft auf das Werkstück vorgesehen. Ein Überschreiten eines Schwellwerts der gemessenen Presskraft soll zum sofortigen Stillsetzen der Maschine ausgewertet werden.

Ein weiteres Formwerkzeug ist aus der DE 203 11 439 U1 bekannt. Bei diesem können die beiden Formwerkzeugteile zum Reinigen in eine geöffnete, um 180° geschwenkte Position zueinander oder in eine Schließstellung gebracht werden, in der ein an einer Spannplatte des Formwerkzeug-Oberteils angeordnetes Werkzeug-Oberteil und ein an einer Spannplatte des Formwerkzeug-Unterteils angeordnetes Werkzeug-Unterteil zur Bildung einer Gieß- oder Spritzform mit einer zwischen ihnen ausgebildeten Kavität geschlossen und dicht aneinander gepresst werden. Falls vor dem Schließen und Aneinanderpressen auf dem Werkzeug-Unterteil ein manuelles Werkzeuge, wie beispielsweise ein Schraubenzieher, liegen geblieben sein sollte, kann es bei dessen Einklemmen zwischen Werkzeug-Unterteil und Werkzeug-Oberteil zu einer Beschädigung der in der Regel sehr teuren, mit höchster Präzision gefertigten Werkzeuge kommen.

Aufgabe der Erfindung ist es, ein Formwerkzeug zu schaffen, mittels dem eine Beschädigung der Werkzeuge infolge eingeschlossener Gegenstände auf einfache Weise wirksam vermieden wird.

Diese Aufgabe wird durch ein Formwerkzeug mit den Merkmalen des Anspruchs 1 gelöst. Vorteilhafte Ausgestaltungen der Erfindung sind in den Unteransprüchen angegeben. Ein erfindungsgemäßes Verfahren ist im Anspruch 9 angegeben.

Gemäß der Erfindung ist das Werkzeug-Oberteil und/oder das Werkzeug-Unterteil bewegbar an einem Trägerteil gelagert. Das Trägerteil ist seinerseits am Formwerkzeug-Oberteil und/oder am Formwerkzeug-Unterteil befestigt oder ein integraler Bestandteil desselben. Die "und/oder"-Verknüpfung wird hier verwendet, weil mindestens eines der Werkzeugteile, entweder das Werkzeug-Oberteil oder das Werkzeug-Unterteil bewegbar an einem Trägerteil gelagert ist. In aller Regel wird dies besonders bevorzugt das Werkzeug-Oberteil sein. Von der Erfindung sind jedoch auch solche Ausführungsformen umfasst, bei denen das Werkzeug-Unterteil oder beide Werkzeugteile bewegbar an einem Trägerteil gelagert sind. Zwischen Werkzeug-Oberteil und/oder Werkzeug-Unterteil und dem Trägerteil ist eine Kompensationsvorrichtung angeordnet. Eine durch einen eingeklemmten Gegenstand bewirkte Relativbewegung zwischen dem Trägerteil und dem Werkzeug-Oberteil oder dem Werkzeug-Unterteil wird mittels eines Sensors detektiert. Aufgrund eines Signals des Sensors wird eine Betätigungsvorrichtung zum Öffnen oder Schließen des Formwerkzeug-Oberteils und des Formwerkzeug-Unterteils und /oder die Kompensationsvorrichtung betätigt, um entweder einen bereits eingeleiteten Schließvorgang zu stoppen oder umzukehren oder um die Kompensationsvorrichtung für eine der Schließbewegung entgegen gerichtete Ausgleichsbewegung freizugeben.

Dadurch wird wirksam verhindert, dass eine Schließkraft zwischen Werkzeug-Unterteil und Werkzeug-Oberteil aufgebaut wird, bei der es zu einer Beschädigung der Werkzeugteile kommen könnte. Das Detektieren eines eingeschlossenen Fremdkörpers führt zu einem sofortigen Nachlassen der Schließkraft und/oder ermöglicht eine Ausweichbewegung des Werkzeug-Unterteils und/oder des Werkzeug-Oberteils gegenüber dessen Trägerteil.

Die Kompensationsvorrichtung wird erfindungsgemäß von wenigstens einem mit einem Fluiddruck beaufschlagbaren oder entlastbaren bzw. entlüftbaren Element gebildet.

Besonders bevorzugt wird die Kompensationsvorrichtung dabei von einem Kissen, einem Balg oder einem Zylinder gebildet. Die Kompensationsvorrichtung kann auch von einem Federelement gebildet werden, das so ausgelegt ist, dass es sich bei einer normalen Schließkraft zwischen Werkzeug-Unterteil und Werkzeug-Oberteil nicht verformt, sondern erst bei einer auf einen Einklemmvorgang hinweisenden erhöhten Schließkraft komprimiert wird.

Die Kompensationsvorrichtung kann gleichzeitig auch zur Ausbildung eines das Werkzeug-Oberteil und das Werkzeug-Unterteil zusammen pressenden Schließdrucks ausgebildet sein. Hierzu kann beispielsweise das mit einem Fluiddruck beaufschlagbare oder entlüftbare Element bei einem Ansprechen des Sensors umgehend zur Druckentlastung umgesteuert bzw. bei einer Ausbildung als Pneumatikelement entlüftet werden.

Vorteilhaft weist das Trägerteil wenigstens eine Führung für das mittels einer Spannplatte an ihm gelagerte Werkzeug-Oberteil oder Werkzeug-Unterteil auf. Bevorzugt sind mehrere parallel zueinander angeordnete Führungen vorgesehen, die insbesondere als optional mit Führungsbuchsen versehene Führungsrohre und in diesen gleitend aufgenommene Führungssäulen ausgebildet sind. Die Führungssäulen sind bevorzugt auf der den Werkzeugteilen abgewandten Seite der Führungsrohre an einer gemeinsamen Gegenhalterplatte befestigt. Somit kann bei einer bewegbaren Anordnung eines Werkzeug-Oberteils an einem Trägerteil das Werkzeug-Oberteil im Trägerteil hängend angeordnet sein, wobei zwischen beiden die Kompensationsvorrichtung angeordnet ist, die eine Relativbewegung zueinander bevorzugt in Abhängigkeit vom Signal des Sensors entweder zulässt oder blockiert.

Der Sensor kann in einer besonders einfachen Ausführungsform als induktiver oder kapazitiver Sensor ausgebildet sein, der an einem zwischen dem Trägerteil und dem an diesem gelagerten Werkzeug-Oberteil oder Werkzeug-Unterteil angeordneten Halter angeordnet ist und eine Veränderung der Relativposition beider Bauteile zueinander überwacht. Solange beide Bauteile beim Schließen der Formwerkzeugteile einen konstanten Abstand zueinander aufweisen, liegt kein Einklemmen vor. Sobald ein mit dem bewegten Formwerkzeugteil, insbesondere dem Formwerkzeug-Oberteil, verbundenes Bauteil, beispielsweise die Gegenhalterplatte nach oben gedrückt wird, erkennt der Sensor die Lageabweichung und steuert über eine entsprechende Steuereinrichtung den für den Schließvorgang zuständigen Motor, Pneumatik- oder Hydraulikzylinder in eine Stopp-Position mit einer vorzugsweise unmittelbar anschließenden Bewegung in Öffnungsrichtung, um einem Bediener die Möglichkeit zu einer Untersuchung des Zwischenraums zwischen den Werkzeugteilen und eine Entfernung eines dort versehentlich vergessenen Gegenstandes zu ermöglichen. Sofern ein zwischen Werkzeug-Oberteil und Trägerteil angeordnete Kompensationsvorrichtung gleichzeitig für das Aufbringen der Schließkraft verantwortlich ist, wird diese bei einem entsprechenden Sensorsignal sofort vom anstehenden Fluiddruck entlastet.

Ein erfindungsgemäßes Verfahren zeichnet sich dadurch aus, dass das Werkzeug-Oberteil an einem Trägerteil relativ zum Werkzeug-Unterteil bewegbar gelagert ist und sich das Werkzeug-Oberteil beim Zufahren auf das Werkzeug-Unterteil solange synchron mit dem Trägerteil bewegt, bis durch einen zwischen Werkzeug-Oberteil und Werkzeug-Unterteil eingeschlossenen Fremdkörper ein erhöhter Schließwiderstand erzeugt wird, der eine zwischen dem Werkzeug-Oberteil und dem Trägerteil angeordnete Kompensationsvorrichtung komprimiert und/oder über ein von einem Sensor detektiertes Signal einer Betätigungsvorrichtung einen Befehl zum Stoppen des Schließvorgangs und/oder zum Auseinanderfahren des Werkzeug-Oberteils und des Werkzeug-Unterteils erteilt und/oder die Kompensationsvorrichtung zur Verhinderung eines Einklemmens des Fremdkörpers betätigt.

Besonders vorteilhaft ist es dabei, wenn der Sensor vor dem Moment oder im Moment des Einklemmens eines Fremdkörpers eine Positionsabweichung zwischen dem Werkzeug-Oberteil und dem Trägerteil detektiert. Alternativ dazu kann auch ein Kraftsensor zum Einsatz kommen, der das Ansteigen der zum Schließen der Werkzeugteile erforderlichen Schließkraft über einen vorgegebenen Grenzwert überwacht und entsprechende Steuerbefehle zum Verhindern eines Einklemmens auslöst.

Nachfolgend wird ein Ausführungsbeispiel eines erfindungsgemäßen Werkzeugs unter Bezugnahme auf die Zeichnungen näher erläutert. Es zeigt:
- Fig. 1: ein an einem Trägerteil gelagertes Werkzeug-Oberteil in geöffneter Position oberhalb eines Werkzeug-Unterteils; und
- Fig. 2: das Werkzeug-Oberteil und das Werkzeug-Unterteil gemäß Figur 1 in teilweise geschlossener Position mit einem zwischen diesen eingeklemmten Fremdkörper.

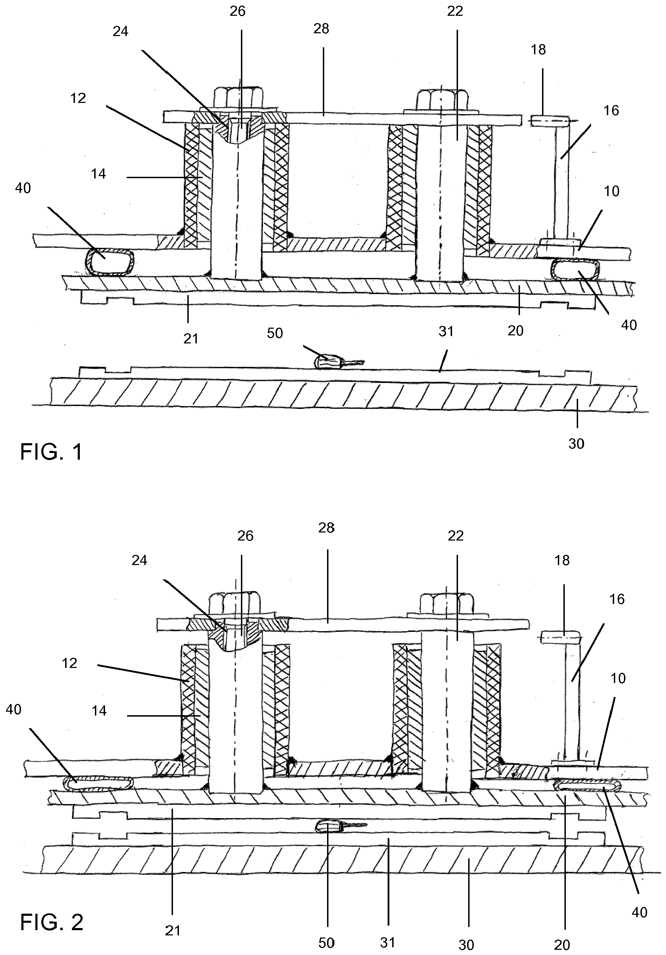

In den Figuren 1 und 2 ist ein zweiteiliges Werkzeug auszugsweise dargestellt, bei dem ein Werkzeug-Oberteil 21 an einer Spannplatte 20 befestigt ist. An einer Spannplatte 30 ist ein Werkzeug-Unterteil 31 befestigt. Das Werkzeug-Oberteil 21 und das Werkzeug-Unterteil 31 bilden in geschlossenem Zustand dicht aneinander anliegend einen Formhohlraum, indem beispielsweise Kunststoffteile gespritzt oder gegossen oder geschäumt werden. In die Kunststoffteile können auch zuvor eingelegte Metall-oder Glasteile eingespritzt, eingegossen oder eingeschäumt werden.

Die untere Spannplatte 30 ist an einem nicht dargestellten Formwerkzeug-Unterteil angeordnet. Ein von einem Schwenkrahmen gebildetes Trägerteil 10 ist an einem nicht dargestellten Formwerkzeug-Oberteil angeordnet. Derartige Formenträger sind dem Fachmann beispielsweise aus der eingangs genannten DE 203 11 439 U1 bekannt, deren Offenbarungsgehalt hiermit ausdrücklich zum Gegenstand der vorliegenden Anmeldung hinzugefügt wird. Das Formwerkzeug-Oberteil ist dabei mittels eines Antriebs in Form eines Elektromotors, eines Hydraulikzylinders oder eines Pneumatikzylinders relativ zum feststehenden Formwerkzeug-Unterteil bewegbar. Durch diesen hier nicht dargestellten Antrieb wird das Formwerkzeug-Oberteil zum Schließen des Werkzeug-Oberteils 21 und des Werkzeug-Unterteils 31 auf das Formwerkzeug-Unterteil zu bewegt. Diese Bewegung kann als Schwenkbewegung, als Linearbewegung oder als überlagerte oder hintereinander erfolgende Schwenk- und/oder Linearbewegung ausgeführt werden.

Die obere Spannplatte 20 für das Werkzeug-Oberteil 21 weist an ihrer Oberseite zwei als Führungssäulen 22 ausgebildete Führungen auf. Die Führungssäulen 22 sind gleitend in Führungsbuchsen 14 gelagert, die ihrerseits in Führungen bildende Führungsrohren 12 angeordnet sind, die fest mit dem Trägerteil 10 verbunden sind. Die Führungssäulen 22 treten mit ihrem oberen Ende über die Führungsbuchsen 14 hinaus und sind dort über Schrauben 26, die in Gewinde 24 an den Führungssäulen 22 einschraubbar sind an einer gemeinsamen Gegenhalterplatte 28 befestigt. Die Gegenhalterplatte 28 ist parallel zum Trägerteil 10 und zur oberen Spannplatte 20 angeordnet. Die obere Spannplatte 20 "hängt" somit im geöffneten Zustand gemäß Figur 1 mittels der Führungssäulen 22 und der Gegenhalterplatte 28 relativ zu diesem bewegbar am Trägerteil 10.

Zwischen der Oberseite der oberen Spannplatte 20 und der Unterseite des Trägerteils 10 sind Kompensationsvorrichtungen 40 angeordnet. Diese sind im Ausführungsbeispiel als Luftkissen 40 ausgebildet, die mit Druckluft beaufschlagbar oder entlüftbar sind. Im geöffneten Zustand gemäß Fig. 1 sind die Luftkissen 40 in Entlüftungsposition, so dass diese beim Absenken der oberen Spannplatte 20 im Falle eines Auftreffens auf ein Hindernis bereits komprimiert werden können. Sofern beim Schließen des Formwerkzeug-Oberteils kein Hindernis festgestellt wird, dienen die anschließend mit einem Luftdruck beaufschlagten Luftkissen 40 zur Erzeugung eines Schließdrucks zwischen Werkzeug-Oberteil 21 und Werkzeug-Unterteil 31.

Am Trägerteil 10 ist ein Halter 16 befestigt, an dessen oberen Ende ein Sensor 18 angeordnet ist. Der Sensor 18 ist im Ausführungsbeispiel als induktiver Sensor ausgebildet. Der Sensor 18 ist exakt in Höhe der Gegenhalterplatte 28 angeordnet und überwacht dadurch den relativen Abstand zwischen der Gegenhalterplatte 28 und somit auch zwischen dem Werkzeug-Oberteil 21 und dem Trägerteil 10.

Wenn bei der Montage des Werkzeug-Oberteils 21 an der Spannplatte 20 oder bei der Montage des Werkzeug-Unterteils 31 an der Spannplatte 30 beispielsweise ein Werkzeug als Fremdkörper 50 zwischen den beiden Werkzeugteilen 21, 31 liegen geblieben ist, würde dies beim Zusammenfahren des Werkzeug-Oberteils 21 und des Werkzeug-Unterteils 31 normalerweise mit hoher Wahrscheinlichkeit zu einer schwerwiegenden Beschädigung der beiden Werkzeugteile 21 bzw. 31 führen.

Durch die bewegbare Anordnung der oberen Spannplatte 20 gegenüber dem Trägerteil 10 kann die obere Spannplatte 20 mit dem Werkzeug-Oberteil 21 bei einem Auftreffen auf den Fremdkörper 50 nach oben ausweichen. Hierbei werden zum einen - wie in Figur 2 gezeigt - die Kompensationsvorrichtungen 40 komprimiert und zum anderen wird die Gegenhalterplatte 28 durch die Führungssäulen 22 gegenüber den Führungsbuchsen 14 nach oben angehoben. Durch den Sensor 18 wird diese Lageabweichung der Gegenhalterplatte 28 bezüglich des Trägerteils 10 detektiert und an eine nicht dargestellte Steuerung gemeldet, mittels der der Schließvorgang der beiden Werkzeugteile 21 bzw. 31 sofort unterbrochen und optional eine Öffnungsbewegung des Formwerkzeug-Oberteils zum Entfernen der beiden Werkzeugteile 21 bzw. 31 voneinander eingeleitet wird.

Die Kompensationsvorrichtungen 40 können, wie bereits ausgeführt, gleichzeitig zum Aufbringen einer Schließkraft zwischen Werkzeug-Oberteil 21 und Werkzeug-Unterteil 31 dienen. Sofern der Sensor 18 die in Figur 2 dargestellte Lageabweichung zwischen der Gegenhalterplatte 28 und dem Trägerteil 10 feststellt, bleiben die im dargestellten Ausführungsbeispiel als aufblasbare Luftkissen 40 ausgebildeten Kompensationsvorrichtungen 40 im entlüfteten Zustand und werden nicht mit Druckluft beaufschlagt, um damit die Ausweichbewegung des Werkzeug-Oberteils 21 nach oben zu ermöglichen.

Eine Entlüftung der Luftkissen 40 kann dabei zeitgleich oder zeitversetzt mit einem Stoppen oder Umsteuern des Antriebs erfolgen, der das Formwerkzeug-Oberteil beim Schließvorgang auf das Formwerkzeug-Unterteil zu bewegt.

Durch die Erfindung wird mit einfachen Mitteln ein Formwerkzeug geschaffen, mittels dem kostspielige Beschädigungen an den Werkzeugteilen 21 bzw. 31 infolge versehentlich liegen gebliebener Fremdkörper 50 wirksam verhindert werden.

### Bezugszeichenliste

| | | | |
|---|---|---|---|
| 10 | Trägerteil (Schwenkrahmen) | 28 | Gegenhalterplatte |
| 12 | Führung (Führungsrohr) | 30 | Spannplatte |
| 14 | Führungsbuchse | 31 | Werkzeug-Unterteil |
| 16 | Halter | 40 | Kompensationselement (Luftkissen) |
| 18 | Sensor | | |
| 20 | Spannplatte | 50 | Fremdkörper |
| 21 | Werkzeug-Oberteil | | |
| 22 | Führung (Führungssäule) | | |
| 24 | Gewinde | | |
| 26 | Schraube | | |

## Patentansprüche

1. Formwerkzeug mit einem ein Werkzeug-Oberteil (21) tragenden Formwerkzeug-Oberteil und einem ein Werkzeug-Unterteil (31) tragenden Formwerkzeug-Unterteil, die zum Öffnen oder Schließen relativ zueinander bewegbar angeordnet sind, wobei das Werkzeug-Oberteil (21) oder das Werkzeug-Unterteil (31) bewegbar an einem zumindest einem der Formwerkzeugteile zugeordneten Trägerteil (10) gelagert ist, wobei zwischen Werkzeug-Oberteil (21) oder Werkzeug-Unterteil (31) und dem dieses lagernden Trägerteil (10) eine Kompensationsvorrichtung (40) angeordnet ist, wobei eine Relativbewegung zwischen dem Trägerteil (10) und dem dieses lagernden Werkzeug-Oberteil (21) oder Werkzeug-Unterteil (31) mittels eines Sensors (18) feststellbar ist und wobei die Kompensationsvorrichtung (40) zur Verhinderung eines Einklemmens eines Gegenstandes (50) betätigbar ist und/oder aufgrund eines Signals des Sensors (18) eine Betätigungsvorrichtung zum Öffnen des Werkzeug-Oberteils (21) und des Werkzeug-Unterteils (31) betätigbar ist, **dadurch gekennzeichnet, dass** die Kompensationsvorrichtung (40) von wenigstens einem mit einem Fluiddruck beaufschlagbaren oder entlastbaren Element gebildet wird.

2. Werkzeug nach Anspruch 1, **dadurch gekennzeichnet, dass** die Kompensationsvorrichtung (40) von einem Kissen, einem Balg oder einem Zylinder gebildet wird.

3. Werkzeug nach Anspruch 2, **dadurch gekennzeichnet, dass** die Kompensationsvorrichtung (40) zur Ausbildung eines das Werkzeug-Oberteil (21) und das Werkzeug-Unterteil (31) zusammenpressenden Schließdrucks ausgebildet ist.

4. Werkzeug nach einem der Ansprüche 1 bis 3, **dadurch gekennzeichnet, dass** das Trägerteil (10) wenigstens eine Führung (12) für das an ihm gelagerte Werkzeug-Oberteil (21) oder Werkzeug-Unterteil (31) aufweist.

5. Werkzeug nach Anspruch 4, **dadurch gekennzeichnet, dass** das Trägerteil (10) wenigstens ein Führungsrohr (12) mit einer Führungsbuchse (14) aufweist, die zur Führung einer am Werkzeug-Oberteil (21) oder Werkzeug-Unterteil (31) angeordneten Führungssäule (22) dient.

6. Werkzeug nach einem Anspruch 5, **dadurch gekennzeichnet, dass** mehrere Führungssäulen (22) mit einer gemeinsamen Gegenhalterplatte (28) verbunden sind.

7. Werkzeug nach einem der Ansprüche 1 bis 6, **dadurch gekennzeichnet, dass** der Sensor (18) als kapazitiver oder induktiver Sensor ausgebildet ist.

8. Werkzeug nach einem der Ansprüche 1 bis 7, **dadurch gekennzeichnet, dass** der Sensor (18) an einem mit dem Trägerteil (10) verbundenen Halter (16) angeordnet ist.

9. Verfahren zum Schließen eines Werkzeugs mit einem Werkzeug-Oberteil (21) und einem Werkzeug-Unterteil (31), die zum Öffnen oder Schließen gegeneinander bewegbar angeordnet sind nach einem der vorhergehenden Ansprüche, **dadurch gekennzeichnet, dass** das Werkzeug-Oberteil (21) an einem Trägerteil (10) relativ zum Werkzeug-Unterteil (31) bewegbar gelagert ist und sich das Werkzeug-Oberteil (21) beim Zufahren auf das Werkzeug-Unterteil (31) solange synchron mit dem Trägerteil (10) bewegt, bis durch einen zwischen Werkzeug-Oberteil (21) und Werkzeug-Unterteil (31) eingeschlossenen Fremdkörper (50) ein erhöhter Schließwiderstand erzeugt wird, der eine zwischen dem Werkzeug-Oberteil (21) und dem Trägerteil (10) angeordnete Kompensationsvorrichtung (40) komprimiert und/oder über ein von einem Sensor (18) detektiertes Signal einer Betätigungsvorrichtung einen Befehl zum Stoppen des Schließvorgangs und/oder zum Auseinanderfahren des Werkzeug-Oberteils (21) und des Werkzeug-Unterteils (31) erteilt und/oder die Kompensationsvorrichtung (40) zur Verhinderung eines Einklemmens des Fremdkörpers (50) betätigt.

10. Verfahren nach Anspruch 9, **dadurch gekennzeichnet, dass** der Sensor (18) beim Einklemmen eines Fremdkörpers (50) eine Positionsabweichung zwischen dem Werkzeug-Oberteil (21) und dem Trägerteil (10) detektiert.
